# FASCICULE DE BREVET EUROPEEN

(11) **EP 3 230 578 B1**
(45) Date de publication et mention de la délivrance du brevet: **24.10.2018**
(21) Numéro de dépôt: 15798010.3
(22) Date de dépôt: 17.11.2015
(51) Int. Cl.: F02M 47/02, F02M 63/00, F16K 31/06, F16F 15/08

(54) **ELECTROVANNE D'INJECTEUR DE CARBURANT**
MAGNETVENTIL FÜR EINEN KRAFTSTOFFINJEKTOR
SOLENOID VALVE OF A FUEL INJECTOR

(30) Priorité: 10.12.2014 FR 1462176
(43) Date de publication de la demande: 18.10.2017
(73) Titulaire: Delphi International Operations Luxembourg S.à r.l., 4940 Bascharage (LU)
(72) Inventeur: THIBAULT, Thierry, F-37530 Saint-Ouen-les-Vignes (FR); LEROUX, Ludovic, F-41120 Monthou-Sur-Bievre (FR); SALMON, Franck, F-41000 Villebarou (FR)
(74) Mandataire: Delphi France SAS
(86) Numéro de dépôt international: PCT/EP2015/076872
(87) Numéro de publication internationale: WO 2016/091544

(56) Documents cités:
- EP-A2- 0 957 262
- WO-A1-99/46052
- WO-A2-2007/028076

## Description

### DOMAINE TECHNIQUE

L'invention est relative à une électrovanne de contrôle d'un injecteur de carburant et, plus particulièrement au ressort de ladite électrovanne.

### ARRIERE-PLAN TECHNOLOGIQUE DE L'INVENTION

Un injecteur de carburant comprend classiquement une aiguille pilotée en ouverture et en fermeture en fonction du différentiel de pression entre une chambre de contrôle et la buse d'injection. Dans la chambre de contrôle, la pression est fonction de la position d'une électrovanne de contrôle deux-voies, ou vanne tout-ou-rien, commutant entre une position ouverte lorsqu'elle est alimentée et une position fermée lorsqu'elle ne l'est pas. Lorsque l'électrovanne est en position fermée, le carburant à haute pression entre dans la chambre de contrôle et sollicite l'aiguille vers la position fermée interdisant l'injection de carburant et, lorsque l'électrovanne commute en position ouverte le carburant préalablement prisonnier de la chambre de contrôle peut sortir via un canal de décharge permettant à la pression dans la chambre de contrôle de diminuer et alors à l'aiguille de se placer en position ouverte permettant l'injection de carburant.

L'électrovanne comprend une bobine, une armature magnétique et un ressort. Lorsque la bobine est alimentée, l'armature se déplace en comprimant le ressort et, lorsque la bobine n'est plus alimentée, le ressort repousse l'armature vers sa position d'origine. L'armature est solidaire d'une tige de vanne coulissant en un alésage hydraulique, les déplacements de la tige dans l'alésage permettant ou non au flux de carburant de s'écouler.

Le ressort est typiquement un ressort de compression à spires hélicoïdales non-jointives agencé au centre de la bobine et dépassant de celle-ci de sorte à venir solliciter l'armature. À titre d'exemple non limitatif, un ressort connu de longueur 10 mm, de diamètre extérieur 2 mm, de diamètre de fil d'environ 0.5 mm et d'environ 15 spires, a une raideur en compression d'environ 40 N/mm et, en fonctionnement il est installé avec une pré-charge de l'ordre 35 N et est sollicité à plusieurs centaines de Hertz, sa compression relative en fonctionnement n'excédant pas 40 µm.

Au cours d'un cycle moteur il est apparu des variations de débit d'injection de carburant liées à des déplacements incontrôlés de l'aiguille. Typiquement, en mode multi-injections, la première ouverture et fermeture de la vanne génère une mise en résonance du ressort de vanne entraînant la propagation d'ondes de compression et de détente mécanique le long du ressort, alors que la vanne est fermée. Lorsque quelques millisecondes après la première ouverture est commandée la seconde ouverture de la vanne, le ressort n'est toujours pas stabilisé et le mouvement de vanne est imprécis.

Une telle électrovanne est montrée par exemple dans le document EP 0 957 262 A.

### RESUME DE L'INVENTION

La présente invention se propose de résoudre au moins partiellement ces problèmes en proposant une électrovanne de contrôle d'un injecteur de carburant. De manière connue, cette électrovanne comprend une bobine adaptée pour être pilotée en alimentation électrique par une unité centrale de commande, la bobine générant un champ magnétique lorsqu'elle est alimentée et, un ensemble armature-tige comprenant une armature magnétique adaptée pour être attirée par le champ magnétique, et une tige de vanne adaptée pour coulisser dans un alésage distributeur hydraulique, l'armature et la tige étant fixées l'une à l'autre. L'électrovanne comprend de plus un dispositif élastique prévu pour déplacer l'ensemble armature-tige lorsque la bobine n'est pas alimentée. De manière connue ce dispositif élastique est un ressort agencé dans un logement pourvu au centre de la bobine, le ressort dépassant légèrement de ladite bobine pour appuyer contre une extrémité de la tige de vanne et l'éloigner de la bobine lorsque celle-ci n'est pas alimentée.

La présente invention se distingue de par le fait que le dispositif élastique comprend l'agencement complémentaire d'un ressort de compression à spires hélicoïdales et d'un autre élément souple solidaire du ressort. Ledit autre élément souple étant de nature à interrompre la propagation d'ondes de compressions et de détentes dans le ressort. Cette caractéristique avantageuse permet d'éviter les perturbations des mouvements de l'ensemble armature-tige, perturbations liées aux compressions et détentes du ressort.

Selon un mode particulier de réalisation, ledit autre élément souple est un surmoulage d'au moins une partie du ressort.

Ledit surmoulage peut occuper plusieurs espaces inter-spires du ressort voire, il peut enrober tout le ressort.

Dans une réalisation spécifique, le surmoulage occupe un espace cylindrique tubulaire enveloppant le ressort et conservant un espace central libre.

Il peut également occuper un espace cylindrique plein sans espace central libre, occupant tout le centre du ressort.

Dans un autre mode de réalisation, seul le fil métallique du ressort est enrobé par ledit autre élément souple. Cet enrobage spécifique peut être réalisé avant même que le fil ne soit enroulé pour former le ressort.

Selon un autre mode de réalisation, ledit autre élément souple est une pièce indépendante insérée au centre du ressort.

Selon un mode particulier ladite pièce indépendante est un cylindre élastique radialement comprimé contre les spires du ressort de sorte à en être solidaire. Le cylindre élastique peut être étiré pour en diminuer la section et ainsi l'insérer au coeur du ressort. En le relâchant le cylindre tente de reprendre sa forme au repos mais demeure comprimé contre l'intérieur des spires.

Selon un autre mode particulier, ledit autre élément souple est un tube élastique au centre duquel est insérée une tige déformant radialement ledit tube de sorte à l'appliquer de manière solidaire contre les spires du ressort.

Selon un autre mode particulier, ledit autre élément souple est un cylindre fileté au même pas que le pas des spires du ressort, ledit autre élément souple pouvant être vissé au centre du ressort (66) de sorte à en devenir solidaire.

Quel que soit le mode de réalisation, ledit autre élément souple peut être en élastomère à base de caoutchouc, par exemple en fluoroélastomère.

L'invention s'étend également à un injecteur de carburant pourvu d'une électrovanne réalisée selon l'un quelconque des modes précédemment cités.

### DESCRIPTION DES FIGURES

Un mode de réalisation de l'invention est maintenant décrit par l'intermédiaire des figures suivantes :
La figure 1 est une vue en coupe axiale d'un injecteur pourvu d'une électrovanne selon l'invention.
La figure 2 est une vue détaillée de la figure 1, vue centrée sur la vanne de contrôle de l'injecteur.
La figure 3 est une section axiale du dispositif élastique de l'électrovanne des figures 1 et 2, le dispositif comprenant un ressort métallique et une partie en élastomère.
La figure 4 est une section transverse du dispositif élastique de la figure 3.
La figure 5 est une section axiale dans lequel le dispositif élastique ne s'étend que sur une partie du ressort.
La figure 6 est une section axiale d'un second mode de réalisation du dispositif élastique de l'électrovanne des figures 1 et 2.
La figure 7 est une section transverse du dispositif élastique de la figure 6.
La figure 8 représente un ressort dans lequel le dispositif élastique de la figure 5 s'étend sur toute la longueur du ressort.
La figure 9 représente un second mode du dispositif élastique de l'électrovanne des figures 1 et 2.
Les figures 10 et 11 représentent un troisième mode de réalisation du dispositif élastique de l'électrovanne des figures 1 et 2, la figure 10 détaillant la mise en place d'un insert élastique dans le ressort métallique et, la figure 11 représentant l'ensemble terminé.
Les figures 12 et 13 représentent un quatrième mode de réalisation du dispositif élastique de l'électrovanne des figures 1 et 2, la figure 12 détaillant la mise en place d'un insert tubulaire élastique dans le ressort métallique et, la figure 13 représentant l'ensemble terminé.

### DESCRIPTION DES MODES DE REALISATION PRÉFÉRÉS

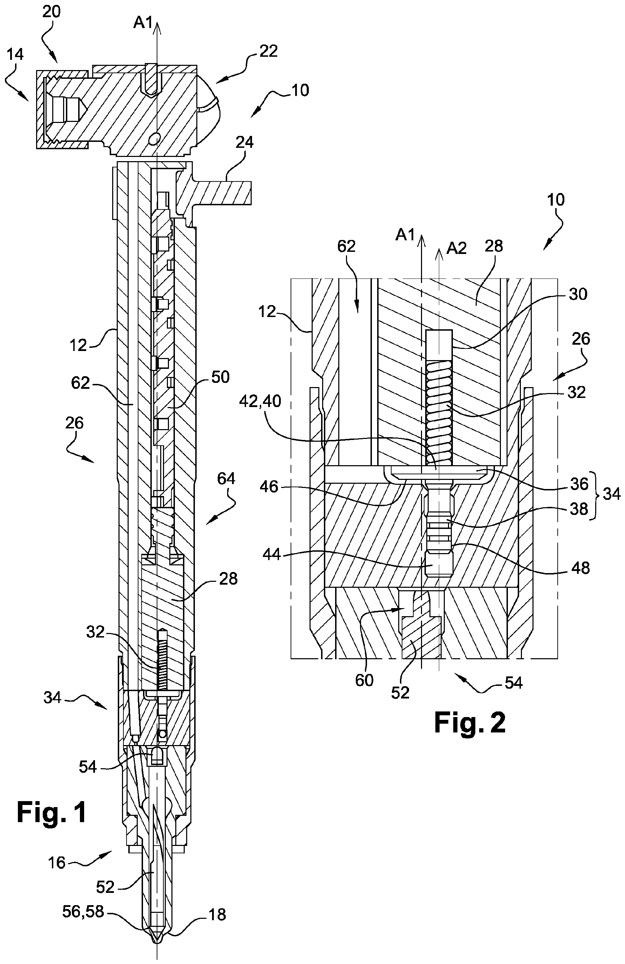

La figure 1 est une section longitudinale d'un injecteur 10 s'étendant selon un axe principal A1, représenté verticalement selon le sens conventionnel et non limitatif de la figure. Pour une simple raison de clarté de la description, l'orientation arbitraire de la figure 1 sera utilisée et ainsi des termes tels que « haut, bas, au-dessus ou en-dessous, vertical... » pourront être utilisés sans que cela ne limite ni la description ni la portée de l'invention.

L'injecteur 10 comprend un corps tubulaire 12 substantiellement cylindrique et réalisé en plusieurs tronçons rigidement fixés les uns aux autres et s'étendant axialement depuis une tête 14 d'injecteur, en haut de la figure, jusqu'à une buse 16 dont l'extrémité est pourvue de trous d'injection 18.

La tête 14 d'injecteur comprend une bouche d'entrée 20, une bouche de sortie 22 et un connecteur électrique 24 adapté pour recevoir un autre connecteur, non représenté, permettant la connexion de l'injecteur 10 à une unité de contrôle.

Sensiblement au centre du corps 12, l'injecteur est pourvu d'une électrovanne 26, plus détaillée par la figure 2, s'étendant selon un axe de vanne A2 parallèle à l'axe principal A1. L'électrovanne 26 comprend une bobine électrique 28 dont le bobinage est surmoulé et pourvu en son centre d'un alésage borgne 30 dans lequel est logé une ressort de vanne 32 comprimé entre le fond de l'alésage 30 et un ensemble armature-tige 34 agencé juste en regard de la bobine 28. L'ensemble armature-tige 34 est composé de l'assemblage rigide d'une armature magnétique 36, ayant la forme d'un disque épais transversal au centre duquel est enchâssée et sertie une tige de vanne 38 s'étendant vers le bas depuis une extrémité supérieure 40 affleurant légèrement au-dessus de la face supérieure 42 de l'armature 36, ladite face supérieure 42 faisant face à la bobine 28, jusqu'à une extrémité inférieure 44 distante de la face inférieure 46 de l'armature 36. La tige de vanne 38 est agencée selon un ajustement juste-glissant dans un alésage distributeur hydraulique 48.

Par ailleurs, l'injecteur représenté sur la figure 1 et sur lequel s'appuie cette description n'est qu'un exemple non limitatif et, de nombreuses alternatives de constructions existent et pourront être mentionnées cependant, les alternatives qui seraient omises ne sauraient être exclues de la portée conférée par les revendications. Par exemple, il vient d'être précisé que l'axe principal A1 et le l'axe de vanne A2 sont distincts et parallèles. Ce désaxage introduit dans le brevet EP1693563 présente de nombreux avantages mais n'est pas impératif et, des injecteurs dans lesquels les deux axes sont confondus existent et peuvent bénéficier des enseignements de la présente invention.

La bobine 28 est électriquement connectée au connecteur 24 via des moyens de connexion 50, tels des câbles rigides ou souples s'étendant verticalement dans un conduit spécifique pourvu dans le corps 12 d'injecteur.

La buse 16, agencée sous l'électrovanne 26, comprend principalement une aiguille 52 agencée coulissante dans un alésage et hydrauliquement pilotée en fonction de la différence de pression entre les deux extrémités de l'aiguille 52. L'aiguille 52, ainsi dénommée par les professionnels en référence à sa forme générale, est un arbre cylindrique allongé s'étendant depuis une tête d'aiguille 54 jusqu'à une pointe conique 56 définissant un siège d'aiguille 58. La tête d'aiguille 54 débouche dans une chambre de contrôle 60 tandis que la pointe conique 56 coopère avec une face du corps 12 de sorte à autoriser ou interdire l'injection de carburant via les trous d'injection 18.

L'injecteur 10 est également pourvu d'un circuit haute pression 62 s'étendant dans le corps 12 entre la bouche d'entrée 20 et les trous d'injection 18, le circuit haute pression 62 alimentant également la chambre de contrôle 60 et, d'un circuit de retour à basse pression 64 s'étendant depuis la chambre de contrôle 60 jusqu'à la bouche de sortie 22 par où du carburant peut retourner vers un réservoir basse pression.

Le fonctionnement général de l'injecteur 10 est maintenant succinctement décrit.

Dans un premier temps la bobine 28 n'est pas alimentée. Elle ne génère donc pas de champ magnétique. L'ensemble armature-tige 34 est repoussé vers le bas en une position fermée PFV par le ressort de vanne 32. Du carburant à haute pression est prisonnier de la chambre de contrôle 60 et, la pression élevée dans ladite chambre de contrôle 60 génère sur la tête d'aiguille 54 une force de fermeture qui maintient l'aiguille 52 en position fermée PFA, ou position basse dans laquelle l'injection de carburant est interdite.

Dans un second temps, la bobine 28 est alimentée et elle génère un champ magnétique qui attire l'armature 36 de sorte que l'ensemble armature-tige 34 se rapproche de la bobine 28 en une position ouverte POV et comprime le ressort 32. Le carburant préalablement prisonnier de la chambre de contrôle 60 peut s'en échapper vers le circuit de retour 64. La pression baissant alors dans la chambre de contrôle 60, l'aiguille 52 se déplace vers le haut en position ouverte POA permettant ainsi l'injection de carburant par les trous d'injection 18.

Les déplacements de l'ensemble armature-tige 34 peuvent atteindre une fréquence de plusieurs centaines de Hertz, pour une amplitude de l'ordre de 30 µm alors que la pression du carburant dans le circuit haute pression 62 peut être de plusieurs milliers de bars.

Dans le but d'atténuer, voire d'amortir ou d'arrêter, la propagation d'ondes de compression et de détente le long du ressort 32, celui-ci comprend une âme métallique formant un ressort hélicoïdal 66 proprement dit ainsi qu'un autre élément souple 68.

Le ressort hélicoïdal 66 est un ressort de compression à spires non jointives dont le fil métallique a un diamètre de l'ordre de 0,5 mm.

Ledit autre élément souple 68 est un surmoulage du ressort hélicoïdal 66 réalisé en un élastomère à base de caoutchouc. Une matière préférée sera par exemple choisie dans la famille des fluoroélastomères pour les qualités reconnues de tenue en température et de tenue aux produits chimiques, ainsi que pour leur forte adhérence sur les fils métallique.

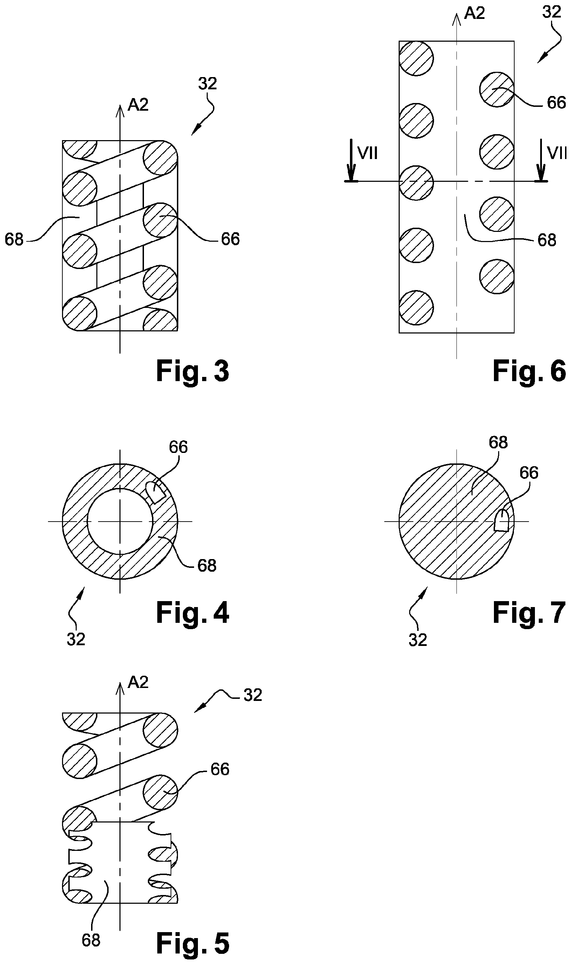

Un premier mode de réalisation est maintenant décrit en référence aux figures 3 et 4.

La figure 3 est une section longitudinale de l'ensemble ressort 32 et le surmoulage 68 est réalisé de sorte que l'élastomère forme un tube dans la paroi duquel est inclus le ressort 66. L'opération de moulage a permis à l'élastomère de s'insérer entre les spires du ressort 66 et d'en occuper l'espace.

La figure 4 est une section transverse permettant d'observer la section tubulaire du surmoulage préservant vide une partie centrale. Une petite section du fil du ressort 66 qui émerge dans le plan de section est représentée.

Le surmoulage est réalisé de sorte à s'étendre axialement d'une extrémité à l'autre du ressort 66. Ainsi l'observateur pourrait ne voir que le surmoulage tubulaire, le ressort 66 étant entièrement inclus dans l'épaisseur de la paroi tubulaire du surmoulage 68 en élastomère.

Selon une alternative représentée en figure 5, le surmoulage peut ne s'étendre que sur une partie des spires du ressort 66, laissant les autres spires libre d'élastomère. Ce surmoulage partiel du ressort 66 peut trouver des formes très variées telles que le surmoulage de plusieurs spires voisines ou bien, le surmoulage de plusieurs spires non-voisines formant ainsi deux zones surmoulées distinctes. Le surmoulage 68 peut encore être réalisé autour d'une petite zone uniquement du ressort 66 ne comprenant qu'une ou deux spires.

Le surmoulage des figures 3 et 4 laisse au centre du ressort une partie vide, prenant ici la forme d'un cylindre. La taille de cette partie vide peut facilement être choisie de sorte que le surmoulage n'enveloppe que le ressort 66, ou bien, cette partie peut être réduite, le surmoulage 68 formant un tube de paroi plus épaisse, le cylindre central ayant de plus petit diamètre.

Selon une réalisation extrême représentée par les figures 6 et 7, le surmoulage est complet ne laissant aucun cylindre central vide.

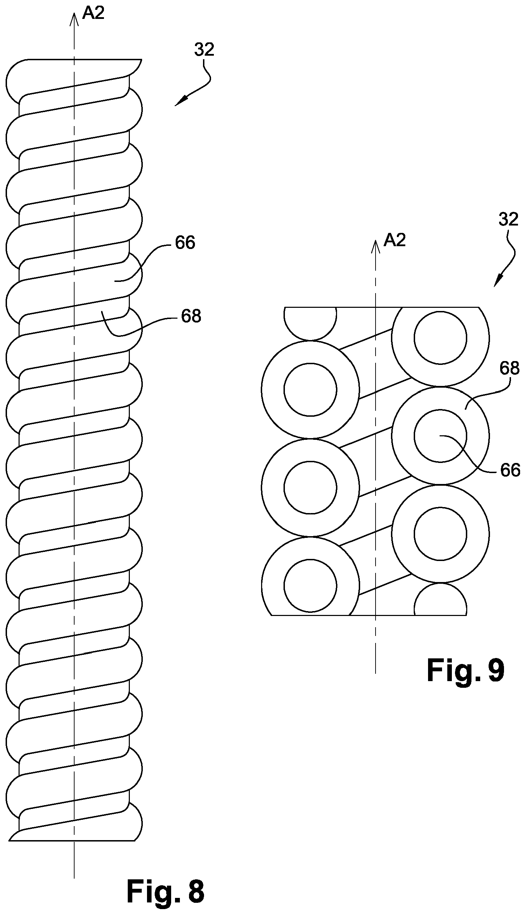

Selon la figure 8 est représenté un ressort 66 au coeur duquel a été pratiqué un surmoulage 68 dont on perçoit que la matière s'est partiellement insérée entre les spires du ressort 66.

Selon la figure 9 est représenté un second mode de réalisation dans lequel le fil métallique a été enrobé d'élastomère à base de caoutchouc avant d'être enroulé et mis en forme de ressort. Dans la version représentée l'enrobage est réalisé de sorte qu'une spire soit en contact avec les spires voisines. Un enrobage moins épais laissant un jeu entre chaque spire voisine est également possible.

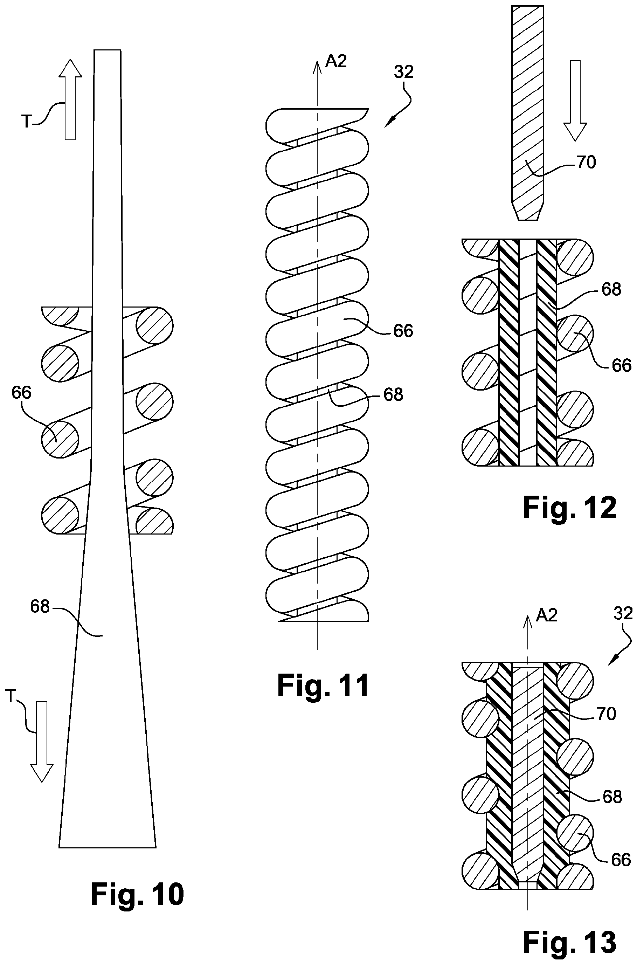

Selon les figures 10 et 11 est représenté un troisième mode de réalisation. Ce troisième mode se distingue des précédent en ce que l'élastomère à base caoutchouc est ajouté sans être surmoulé sur le fil du ressort.

La figure 10 illustre la mise en place d'un cylindre d'élastomère au centre du ressort. Au repos, le cylindre élastique 68 a une section transverse supérieure à celle disponible au centre du ressort 66. Le cylindre 68 est ensuite étiré, selon les flèches opposées T, de sorte à en diminuer la section et a ainsi pouvoir l'insérer au coeur des spires du ressort 66.

La force de traction T est ensuite relâchée et le cylindre tente naturellement de reprendre sa forme de repos mais, par manque de place au coeur du ressort, il demeure radialement comprimé contre les spires du ressort tel que selon la figure 11.

Une fois en place, selon la figure 11, l'ensemble comprenant le ressort 66 et le cylindre élastique 68 forme un ensemble solidaire se déformant en utilisation en compressions et détentes.

Selon les figures 12 et 13 est représenté un quatrième mode de réalisation dans lequel, à l'instar du troisième mode l'élastomère est ajouté sans être surmoulé.

Selon ce quatrième mode de réalisation, selon la figure 12, l'élastomère 68 forme une pièce tubulaire qui est librement insérée au centre du ressort 66.

Ensuite, selon la figure 13, une tige 70 est insérée en force au centre du tube élastique 68. Cette insertion forcée déforme radialement le tube élastique 68, selon la figure 13, en faisant accroitre sa section de sorte que la face extérieure du tube soit pressée contre le fil métallique du ressort 66 et épouse localement la forme du fil et s'insère légèrement entre chaque spire.

Une fois en place, selon la figure 13, l'ensemble comprenant le ressort 66, le tube en élastomère 68 et la tige 70 forme un ensemble solidaire se déformant en utilisation en compressions et détentes.

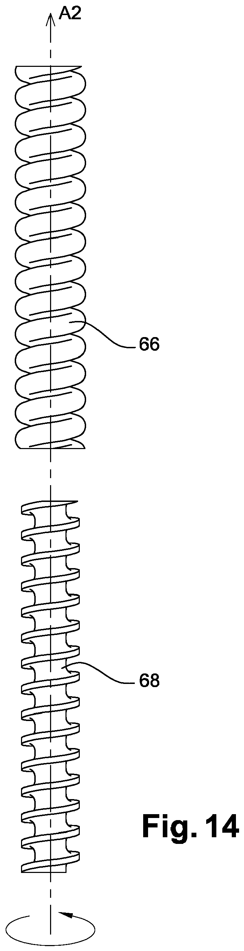

Selon un cinquième mode de réalisation représenté en figure 14, l'insert en élastomère 68 est réalisé, indépendamment du ressort métallique 66, comme étant une pièce filetée pouvant être insérée par vissage complémentaire au coeur du ressort. La figure présente les deux pièces avant assemblage. Selon ce qui sera souhaité lors de la mise au point de l'injecteur, l'insert peut être vissé sur la totalité de la longueur du ressort 66 ou bien, un insert plus court ne sera vissé que sur une partie de la longueur du ressort, par exemple la moitié ou les trois quart.

### REFERENCES UTILISEES

- 10: injecteur
- 12: corps d'injecteur
- 14: tête d'injecteur
- 16: buse
- 18: trous d'injection
- 20: bouche d'entrée
- 22: bouche de sortie
- 24: connecteur électrique
- 26: électrovanne
- 28: bobine
- 30: alésage axial
- 32: ressort de vanne
- 34: ensemble armature-tige
- 36: armature
- 38: tige de vanne
- 40: extrémité supérieur de la tige
- 42: face supérieure de l'armature
- 44: extrémité inférieure de la tige
- 46: face inférieure de l'armature
- 48: alésage distributeur hydraulique
- 50: câbles électriques
- 52: aiguille
- 54: tête d'aiguille
- 56: pointe conique de l'aiguille
- 58: siège d'aiguille
- 60: chambre de contrôle
- 62: circuit haute pression
- 64: circuit de retour basse pression
- 66: ressort hélicoïdal
- 68: autre élément souple
- 70: tige

- A1: axe principal
- A2: axe de vanne
- PFV: position fermée de la vanne
- POV: position ouverte de la vanne
- PFA: position fermée de l'aiguille
- POA: position ouverte de l'aiguille
- T: force de traction

## Revendications

1. Electrovanne de contrôle (26) d'un injecteur (10) de carburant, l'électrovanne (26) comprenant
- une bobine (28) adaptée pour être pilotée en alimentation électrique par une unité centrale de commande, la bobine (28) générant un champ magnétique lorsqu'elle est alimentée,
- un ensemble armature-tige (34) comprenant une armature magnétique (36) adaptée pour être attirée par le champ magnétique, et une tige de vanne (38) adaptée pour coulisser dans un alésage distributeur hydraulique (48), l'armature (36) et la tige (38) étant fixées l'une à l'autre et,
- un dispositif élastique (32) prévu pour déplacer l'ensemble armature-tige (34) lorsque la bobine (28) n'est pas alimentée,
**caractérisée en ce que**
le dispositif élastique (32) comprend l'agencement complémentaire et solidaire d'un ressort de compression (66) à spires hélicoïdales et d'un autre élément souple (68) solidaire du ressort (66), ledit autre élément souple (68) étant de nature à interrompre la propagation d'ondes de compressions et de détentes dans le ressort (66).

2. Electrovanne de contrôle (26) selon la revendication précédente dans laquelle ledit autre élément souple (68) est un surmoulage d'au moins une partie du ressort (66).

3. Electrovanne de contrôle (26) selon la revendication 2 dans laquelle ledit surmoulage enrobe tout le ressort (66).

4. Electrovanne de contrôle (26) selon la revendication 2 dans laquelle ledit surmoulage occupe un espace cylindrique tubulaire enveloppant le ressort (66) et conservant un espace central libre.

5. Electrovanne de contrôle (26) selon l'une quelconque des revendications 2 à 4, dans laquelle ledit surmoulage occupe un espace cylindrique plein sans espace central libre.

6. Electrovanne de contrôle (26) selon la revendication 2 dans laquelle le surmoulage n'enrobe que le fil métallique du ressort (66).

7. Electrovanne de contrôle (26) selon la revendication 1 dans laquelle l'autre élément souple (68) est un cylindre élastique insérée au centre du ressort et radialement comprimé contre les spires du ressort (66) de sorte à en être solidaire.

8. Electrovanne de contrôle (26) selon la revendication 1 dans laquelle l'autre élément souple (68) est un tube élastique inséré au centre du ressort et au centre duquel est inséré une tige (70) déformant radialement ledit tube (68) de sorte à le comprimer radialement de manière solidaire contre les spires du ressort (66).

9. Electrovanne de contrôle (26) selon la revendication 1 dans laquelle l'autre élément souple (68) est un cylindre fileté pouvant être vissé au centre du ressort (66) de sorte à en devenir solidaire.

10. Electrovanne de contrôle (26) selon l'une quelconque des revendications précédente dans laquelle ledit autre élément souple (68) est en élastomère à base de caoutchouc pouvant être un fluoroélastomère.

11. Injecteur de carburant (10) pourvu d'une électrovanne (26) réalisée selon l'une quelconque des revendications précédentes.

## Patentansprüche

1. Steuermagnetventil (26) eines Kraftstoffinjektors (10), wobei das Magnetventil (26) enthält:
- eine Spule (28), die dazu ausgelegt ist, unter Stromversorgung von einer zentralen Steuereinheit angesteuert zu werden, wobei die Spule (28) ein Magnetfeld erzeugt, wenn sie mit Strom versorgt wird,
- eine Anker-Schaft-Anordnung (34) mit einem Magnetanker (36), der dazu ausgelegt ist, von dem Magnetfeld angezogen zu werden, und mit einem Ventilschaft (38), der dazu ausgelegt ist, in einer hydraulischen Verteilerbohrung (48) zu gleiten, wobei der Anker (36) und der Schaft (38) aneinander befestigt sind, und
- eine elastische Vorrichtung (32), die dazu vorgesehen ist, die Anker-Schaft-Anordnung (34) dann zu verlagern, wenn die Spule (28) nicht mit Strom versorgt wird,
**dadurch gekennzeichnet, dass**
die elastische Vorrichtung (32) die komplementäre, fest verbundene Anordnung von einer Druckfeder (66) mit Spiralwindungen und von einem weiteren nachgiebigen Element (68) enthält, das fest mit der Feder (66) verbunden ist, wobei das weitere nachgiebige Element (68) so beschaffen ist, dass es die Ausbreitung von Kompressions- und Entspannungswellen in der Feder (66) unterbricht.

2. Steuermagnetventil (26) nach dem vorangehenden Anspruch, wobei das weitere nachgiebige Element (68) eine Anformung zumindest eines Teils der Feder (66) ist.

3. Steuermagnetventil (26) nach Anspruch 2, wobei die Anformung die gesamte Feder (66) ummantelt.

4. Steuermagnetventil (26) nach Anspruch 2, wobei die Anformung einen zylinderrohrförmigen Raum einnimmt, der die Feder (66) umhüllt und einen mittigen Freiraum beibehält.

5. Steuermagnetventil (26) nach einem der Ansprüche 2 bis 4, wobei die Anformung einen voll ausgeführten zylindrischen Raum ohne mittigen Freiraum einnimmt.

6. Steuermagnetventil (26) nach Anspruch 2, wobei die Anformung nur den Metalldraht der Feder (66) ummantelt.

7. Steuermagnetventil (26) nach Anspruch 1, wobei das weitere nachgiebige Element (68) ein elastischer Zylinder ist, der in die Mitte der Feder eingeführt ist und radial an die Windungen der Feder (66) so gedrückt wird, dass er fest damit verbunden ist.

8. Steuermagnetventil (26) nach Anspruch 1, wobei das weitere nachgiebige Element (68) ein elastisches Rohr ist, das in die Mitte der Feder eingeführt ist und in dessen Mitte ein Schaft (70) eingeführt ist, der das Rohr (68) radial so verformt, dass es radial so zusammengedrückt wird, dass es fest an die Windungen der Feder (66) angebunden ist.

9. Steuermagnetventil (26) nach Anspruch 1, wobei das weitere nachgiebige Element (68) ein Gewindezylinder ist, der in die Mitte der Feder (66) eingeschraubt werden kann, so dass er fest damit verbunden wird.

10. Steuermagnetventil (26) nach einem der vorangehenden Ansprüche, wobei das weitere nachgiebige Element (68) aus Elastomer auf Basis von Kautschuk besteht, das ein Fluorelastomer sein kann.

11. Kraftstoffinjektor (10) mit einem Magnetventil (26), das nach einem der vorangehenden Ansprüche hergestellt ist.

## Claims

1. Solenoid control valve (26) for a fuel injector (10), said solenoid valve (26) comprising
- a coil (28) intended to be controlled by electrical power by means of a central control unit, the coil (28) generating a magnetic field when powered,
- an armature-rod assembly (34) comprising a magnetic armature (36) intended to be attracted by the magnetic field, and a valve rod (38) intended to slide in a hydraulic distribution bore (48), the armature (36) and the rod (38) being fixed to each other, and
- a resilient device (32) provided for moving the armature-rod assembly (34) when the coil (28) is not powered,
**characterized in that**
the resilient device (32) comprises the complementary and fixed arrangement of a compression spring (66) having helical coils and another flexible element (68) fixedly connected to the spring (66), said other flexible element (68) being suitable for interrupting the propagation of compression and expansion waves in the spring (66).

2. Solenoid control valve (26) according to the preceding claim, wherein said other flexible element (68) is a moulding over at least part of the spring (66).

3. Solenoid control valve (26) according to Claim 2, wherein said moulding covers the entire spring (66).

4. Solenoid control valve (26) according to Claim 2, wherein said moulding occupies a tubular cylindrical space encasing the spring (66) and retaining a free central space.

5. Solenoid control valve (26) according to any of claims 2 to 4, wherein said moulding occupies a solid cylindrical space without a free central space.

6. Solenoid control valve (26) according to Claim 2, wherein the moulding covers only the metallic wire of the spring (66).

7. Solenoid control valve (26) according to Claim 1, wherein the other flexible element (68) is an elastic cylinder inserted in the centre of the spring and radially compressed against the coils of the spring (66) so as to be fixedly connected thereto.

8. Solenoid control valve (26) according to Claim 1, wherein the other flexible element (68) is an elastic tube inserted in the centre of the spring, in the centre of which a rod (70) is inserted which radially deforms said tube (68) so as to compress it radially in such a way as to be fixedly connected to the coils of the spring (66).

9. Solenoid control valve (26) according to Claim 1, wherein the other flexible element (68) is a threaded cylinder which can be screwed to the centre of the spring (66) so as to be fixedly connected thereto.

10. Solenoid control valve (26) according to any of the preceding claims, wherein said other flexible element (68) is made of a rubber-based elastomer which may be a fluoro-elastomer.

11. Fuel injector (10) provided with a solenoid valve (26) produced according to any of the preceding claims.
